# EUROPÄISCHE PATENTANMELDUNG

(11) **EP 3 088 865 A1**
(43) Veröffentlichungstag der Anmeldung: **02.11.2016**
(21) Anmeldenummer: 15165324.3
(22) Anmeldetag: 28.04.2015
(51) Int. Cl.: G01N 21/15, G01N 21/85, G01N 21/3504, G01N 21/39

(54) **MESSSTUTZEN UND ROHRANORDNUNG AUFWEISEND EINEN DERARTIGEN MESSSTUTZEN**

(71) Anmelder: Bayer Technology Services GmbH, 51368 Leverkusen (DE)
(72) Erfinder: Froese, Ralf, 47802 Krefeld (DE)
(74) Vertreter: BIP Patents

(57) **Zusammenfassung**

Die vorliegende Erfindung betrifft einen Messstutzen zum optischen Untersuchen eines durch eine Gasleitung (12) geleiteten Gases durch Analysieren einer durch das Gas geführten Messstrahlung (22), wobei der Messstutzen (16, 16') an der das zu untersuchende Gas führenden Gasleitung (12) fixierbar ist, und wobei der Messstutzen (16, 16') einen Messkanal (26) zum Durchleiten der Messstrahlung (22) aufweist, wobei der Messstutzen (16, 16') zusätzlich zu dem Messkanal (26) einen von dem Messkanal (16, 16') zumindest teilweise getrennten Dampfkanal (28) aufweist, wobei der Dampfkanal (28) den Messkanal (26) zumindest teilweise umrahmt. Ein vorbeschriebener Messstutzen (16, , 16') erlaubt eine verlängerte Messphase und eine verkürzte Regenerierungsphase bei einem ressourcenschonenden Regeneieren des Messstutzens (16, 16').

## Beschreibung

Die vorliegende Erfindung betrifft einen Messstutzen zum optischen Untersuchen eines durch eine Gasleitung geleiteten Gases durch Analysieren einer durch das Gas geführten Messstrahlung, insbesondere durch Bestimmung von Absorptionswerten der durch das zu untersuchende Gas geführten Messstrahlung. Die vorliegende Erfindung betrifft ferner eine Rohranordnung, welche wenigstens einen derartigen Messstutzen aufweist und ein Verfahren zum optischen Untersuchen eines Gases unter Verwendung eines derartigen Messstutzens beziehungsweise unter Verwendung einer derartigen Rohranordnung.

Es ist in vielen Anwendungen erwünscht, Gase zu untersuchen. Dazu kann es insbesondere bevorzugt sein, Gase auf ihre chemische Beschaffenheit zu untersuchen und dabei störende Flüssigkeitstropfen oder Feststoffpartikel oder Gasbestandteile zu detektieren.

Es kann vorgesehen sein, das Gas durch eine betriebliche Gasleitung zu führen und quer zu der Flussrichtung des Gases eine Absorbtionsmessung im Bereich der Wellenlänge der zu Messenden chemischen Komponente durchzuführen, indem etwa ein Spektrum einer durch das Gas geführten Messstrahlung analysiert wird. Insbesondere kann es dabei vorgesehen sein, dass die Transmission ermittelt wird, welche Rückschlüsse etwa auf die Verschmutzung des zu untersuchenden Gases liefern kann. Dazu sind oftmals Messstutzen vorgesehen, die am Inneren der Gasleitung angeordnet sind und durch welche eine Messstrahlung in die Gasleitung geführt wird. Gegenüberliegend und in der Strahlrichtung der Messstrahlung kann entsprechend eine Detektionsöffnung vorgesehen sein, um die Messstrahlung zu detektieren.

Nachteilig an der Verwendung von Messstutzen aus dem Stand der Technik kann es dabei insbesondere sein, dass die Messstutzen durch in dem Gasstrom befindliche Verunreinigungen verschmutzen bis hin zu einer teilweisen oder vollständigen Undurchlässigkeit für die Messstrahlung. Ist dies der Fall, muss die Messung unterbrochen und der Messstutzen gereinigt werden. Dies hat zum einen teilweise aufwändige Servicearbeiten zur Folge und bedingt ferner Ausfallzeiten der Messeinheit und/oder Produktionsanlage.

Es bestand daher Bedarf an einem Mittel, um zumindest einen Nachteil aus dem Stand der Technik zumindest teilweise zu verbessern. Insbesondere ist es die Aufgabe der vorliegenden Erfindung, ein Mittel zu schaffen, mit welchem eine optische Untersuchung eines durch eine Gasleitung fließenden Gases langzeitstabiler sein kann und/oder bei dem Ausfallzeiten reduziert werden können.

Diese Aufgabe wird durch einen Messstutzen mit den Merkmalen des Anspruchs 1 gelöst. Diese Aufgabe wird ferner durch eine Rohranordnung mit den Merkmalen des Anspruchs 5 gelöst. Diese Aufgabe wird ferner durch ein Verfahren mit den Merkmalen des Anspruchs 10 gelöst. Weitere Merkmale sind in den Unteransprüchen, der Beschreibung und in den Figuren angegeben, wobei die weiteren Merkmale einzeln oder in einer beliebigen Kombination ein Bestandteil der Erfindung sein können, wenn sich nicht aus dem Kontext explizit das Gegenteil ergibt.

Es wird ein Messstutzen zum optischen Untersuchen eines durch eine Gasleitung geleiteten Gases durch Analysieren einer durch das Gas geführten Messstrahlung vorgeschlagen, wobei der Messstutzen an einer das zu untersuchende Gas führenden Gasleitung fixierbar ist, und wobei der Messstutzen einen Messkanal zum Durchleiten der Messstrahlung aufweist. Der Messstutzen ist dadurch gekennzeichnet, dass er zusätzlich zu dem Messkanal einen von dem Messkanal zumindest teilweise getrennten Dampfkanal aufweist, wobei der Dampfkanal den Messkanal zumindest teilweise umrahmt.

Ein vorbeschriebener Messstutzen erlaubt auf einfache und kostengünstige Weise eine verlängerte Messphase beziehungsweise Messperiode und eine verkürzte und vereinfachte Regenerierungsphase.

Die vorliegende Erfindung betrifft somit einen Messstutzen zum optischen Untersuchen eines durch eine Gasleitung geleiteten Gases durch Analysieren einer durch das Gas geführten Messstrahlung. Im Detail dient der Messstutzen somit dem optischen Untersuchen eines Gases, indem durch das Gas eine Messstrahlung geleitet wird. In Abhängigkeit der in dem Gas vorliegenden Substanzen weist die durch das Gas geleitete Messstrahlung nach dem Durchtreten durch das Gas ein definiertes Spektrum auf, welches durch einen Detektor detektierbar und durch eine Auswerteeinheit analysierbar ist. Durch eine Analyse des Spektrums kann insbesondere ein Absorptionswert beziehungsweise eine Mehrzahl von Absorptionswerten oder ein Transmissionswert beziehungsweise eine Mehrzahl von Transmissionswerten etwa einzelner Wellenlängenbereiche oder des gesamten Spektrums der durch das zu untersuchende Gas geführten Messstrahlung ermittelbar sein. Dabei wird im Folgenden stets von einer optischen Untersuchung des Gases gesprochen, wobei dies das grundsätzliche Analysieren des Spektrums wie etwa das Ermitteln von Absorptionswerten, Transmissionswerten und ähnlichem umfasst, ohne dass jedes Mal gesondert darauf hingewiesen wird.

In nicht beschränkender Weise kann die Messstrahlung etwa von einem Laser, wie beispielsweise von einem TDSL (tunable diode laser) erzeugt werden. Ein nicht beschränkendes Einsatzgebiet umfasst beispielsweise die Erzeugung von Kohlenmonoxid (CO), in welchem etwa Unreinheiten, wie beispielsweise Sauerstoff, durch das Ermitteln von Absorptionswerten beziehungsweise Transmissionswerten feststellbar sind. Ferner sind Anwendungen in der Petrochemie denkbar, wobei die vorgenannten Beispiele nicht beschränkend sind. Die exakte Art der Strahlungsquelle, der verwendeten Strahlung und des Detektors zum Detektieren der das zu untersuchende Gas durchtretenden Messstrahlung ist dabei in für den Fachmann ohne weiteres ersichtlicher Weise wählbar in Abhängigkeit des konkreten Anwendungsbeispiels, wie etwa einer zu detektierenden Komponente beziehungsweise des zu untersuchenden Gases.

Unter einem Messstutzen ist dabei in für den Fachmann ohne weiteres verständlicher Weise ein insbesondere rohrförmiges Gebilde zu verstehen, welches beispielsweise aber nicht zwingend einen kreisrunden Durchmesser aufweisen kann. Der Messstutzen dient dabei dem Untersuchen eines Gases, welches durch eine Gasleitung strömt. Insbesondere dient der Messstutzen als Führung für eine Messstrahlung, welche zunächst durch den Messstutzen und anschließend durch das zu untersuchende Gas beziehungsweise zunächst durch das zu untersuchende Gas und dann durch den Messstutzen und zu einem Detektor geführt wird.

Für eine vorbeschriebene Messung ist der Messstutzen an der das zu untersuchende Gas führenden Gasleitung, welche etwa als eine Stahlleitung mit geeignetem Durchmesser ausgestaltet sein kann, fixierbar. Dabei ist der Messstutzen insbesondere an der Innenwandung der Gasleitung anordbar und beispielsweise ebenfalls an der Innenwandung der Gasleitung fixierbar. Alternativ kann es vorgesehen sein, dass der Messstutzen durch die Gasleitung durchgeführt wird und an einer Durchführungsöffnung oder an der Außenwandung der Gasleitung fixiert ist. Grundsätzlich kann eine Fixierung etwa anhand einer Schraubverbindung und etwaigen Dichtungen problemlos realisierbar sein. Somit kann der Messstutzen entsprechende Verbindungsmittel aufweisen, durch welche der Messstutzen an der Gasleitung befestigbar ist. Die Befestigungsmittel sind dabei nicht beschränkt und können etwa Gewinde oder Löcher für eine Schraubverbindung umfassen. Grundsätzlich kann es vorgesehen sein, dass für einen Eintritt der Messstrahlung in die Gasleitung und/oder für einen Austritt der Messstrahlung aus der Gasleitung ein jeweiliger Messstutzen vorgesehen ist.

Um die Messstrahlung durch den Messstutzen zu leiten, weist der Messstutzen einen Messkanal auf. Dieser ist in seinem Querschnitt beziehungsweise in seiner Dimension nicht beschränkt. Beispielsweise kann der Messkanal einen kreisrunden Querschnitt aufweisen und eine an das gewünschte Anwendungsgebiet angepasste Länge. Der Durchmesser ist ebenfalls grundsätzlich frei wählbar, kann jedoch gering gewählt werden, da der Messkanal lediglich dazu dient, die Messstrahlung aufzunehmen. Beispielhaft aber in keiner Weise beschränkend kann der Messkanal in einem Bereich von ¾ Zoll, also etwa 2cm oder bei 1 Zoll liegen. Grundsätzlich sollte der Kanal bezüglich seines Verlaufs insbesondere gerade sein, um einen problemlosen Durchtritt der Messstrahlung zu ermöglichen. Der Durchmesser sollte so dimensioniert sein, das eine Inertisierung des Messkanals im Prozessbetrieb gewährleistet sein kann.

Um eine geeignete Funktionalität sicherzustellen, kann der Messkanal bei einer strahlungsquellenseitigen Anordnung bei einem Betrieb an einem ersten Ende, welches das der Wandung der Gasleitung benachbarte Ende sein kann, offen sein und mit der Strahlungsquelle optisch verbunden sein, um die Messstrahlung aufzunehmen. Ferner kann der Messkanal an einem zweiten, dem ersten Ende entgegengesetzt angeordneten Ende, welches in das Innere der Gasleitung ragen kann, ebenfalls offen sein, um einen problemlosen Austritt der Messstrahlung zu gewährleisten. Ferner kann der Messstutzen entsprechend bei einer detektorseitigen Positionierung an einem ersten Ende, welches das der Wandung der Gasleitung benachbarte Ende sein kann, offen sein und mit dem Detektor optisch verbunden sein, um die Messstrahlung zu dem Detektor durchleiten zu können. Ferner kann der Messkanal an einem zweiten, dem ersten Ende entgegengesetzt angeordneten Ende, welches in das Innere der Gasleitung ragt, ebenfalls offen sein, um einen problemlosen Eintritt der Messstrahlung in den Messstutzen zu gewährleisten.

Ragt der Messstutzen mit seinem Messkanal in die Gasleitung hinein, können nach einer bestimmten Betriebsdauer Verschmutzungen an dem offenen Ende des Messkanals entstehen. Diese können dazu führen, dass die Messstrahlung nicht mehr ungehindert durch den Messkanal beziehungsweise aus dem Messkanal und in die Gasleitung oder aus der Gasleitung und in den Messkanal gelangen kann. Dadurch kann das Ergebnis einer optischen Messung, wie insbesondere das Untersuchen eines Spektrums beziehungsweise einer Absorptionsmessung oder einer Transmissionsmessung der Messstrahlung, verfälscht werden, was die Zuverlässigkeit der Messung verständlicher Weise herabsetzt. In einem Extremfall setzt sich der Messkanal zu beziehungsweise verschließt sich dieser, so dass eine Messung unmöglich wird. Um dies zu verhindern, ist es im Stand der Technik bekannt, die durchgeführte Messung zu unterbrechen und den Messstutzen nach bestimmten Messzyklen, welche im Stand der Technik vergleichsweise kurz sein können, auszubauen und zu reinigen beziehungsweise zu regenerieren. Derartige Regenerierungszyklen sind jedoch unerwünscht, da sie ein Stilllegen der Messanordnung erfordern, was Prozesse erschweren oder das Vorsehen einer Mehrzahl von gleichartigen Messanordnungen erforderlich machen kann. Zudem muss für eine Demontage der Messanordnung oftmals eine mit der Gasleitung verbundene Produktionsanlage abgestellt werden.

Um die störungsfreien Messzyklen zu verlängern beziehungsweise die Regenerierungszyklen zu verkürzen, ist es bei einem vorbeschriebenen Messstutzen vorgesehen, dass der Messstutzen zusätzlich zu dem Messkanal einen von dem Messkanal zumindest teilweise getrennten Dampfkanal aufweist, wobei der Dampfkanal den Messkanal zumindest teilweise umrahmt. Eine derartige Ausgestaltung kann beispielsweise dadurch ermöglicht werden, dass der Messkanal durch eine Messkanalwandung begrenzt ist und dass der Dampfkanal durch eine die Messkanalwandung zumindest teilweise umrahmende Dampfkanalwandung begrenzt ist. Dann liegt der Messkanal innerhalb der Messkanalwandung vor und liegt der Dampfkanal zwischen der Messkanalwandung und der Dampfkanalwandung vor.

Ein vorbeschriebener Messstutzen weist gegenüber den Lösungen aus dem Stand der Technik signifikante Vorteile auf.

Der vorbeschriebene Messstutzen umfasst nicht nur einen Messkanal zum Durchleiten der Messstrahlung, sondern es ist vielmehr ein weiterer Kanal vorgesehen. Der weitere Kanal dient als Dampfkanal und damit insbesondere einer Reinigung beziehungsweise Regenerierung des Messstutzens. Entsprechend ist der Dampfkanal in einem Betrieb an seinem ersten Ende mit einer Speiseleitung verbunden und ist der Dampfkanal an seinem zweiten, dem ersten Ende entgegengesetzten Ende, welches in das Innere der Gasleitung ragt, offen.

Der Dampfkanal dient somit beispielsweise dazu, Verunreinigungen zu lösen, welche sich während eines Messbetriebs an dem Messstutzen festsetzen und welche die Messung beeinträchtigen beziehungsweise verhindern. Derartige Verunreinigungen sind meist wasserlöslich oder lassen sich durch Wasserdampf meist lösen, wie dies nachstehend im Detail beschrieben wird. Nach einem Lösen der Verunreinigungen kann es vorteilhaft sein, wenn der Wasserdampf aus dem System ausgetragen wird, da beispielsweise bei einem Reinigen des Stutzens mit Wasserdampf sich noch eine gewisse Menge an Wasser im System, etwa in den Ventilen oder auch in den Leitungen, befinden kann, welches durch Inertisierungsmittel, ausgetragen werden sollte. Hierzu kann als Inertisierungsmittel beispielsweise Stickstoff verwendet werden, welcher durch den Dampfkanal geführt wird. Somit ist der Dampfkanal in für den Fachmann verständlicher Weise nicht auf das Führen von Dampf beschränkt, wobei jedoch das Führen von Dampf, insbesondere Wasserdampf, eine der Hauptanwendungungen des Dampfkanals sein kann.

Weiterhin dient der Dampfkanal dazu, eine permanente Inertisierung des Messkanals zu erlauben. Denn im Detail kann es von Vorteil sein, dass stets eine gewisse Menge an inertem Gas beziehungsweise einem Inertisierungsmittel, wie etwa Stickstoff, durch den Messstutzen geleitet wird, um so die Pfadlänge der Messstrahlung außerhalb des zu untersuchenden Gases sicherzustellen und so eine höchst exakte Messung zu ermöglichen. Dazu kann das inerte Gas insbesondere durch den Dampfkanal geleitet werden, da so ein Eintreten von zu untersuchendem Gas auch in den Messkanal und damit eine Veränderung der optischen Pfadlänge beziehungsweise Messlänge effektiv verhindert werden kann. Hierzu kann es im Stand der Technik notwendig sein, Stickstoff mit einem Fluss von bis zu 800l/h zu verwenden, was hohe Kosten verursachen kann, und ferner die Reinheit des Produktes herabsetzen kann.. Unter Verwendung eines vorbeschriebenen Messstutzens kann die notwendige Menge an Intertisierungsmittel, wie etwa Stickstoff, auf beispielhaft 200l/h reduziert werden. Insbesondere können so gegebenenfalls vorliegende Grenzwerte eingehalten werden, die etwa für einen ständigen Inertisierungsvorgang bei 1,2m³/h an eingefügtem Stickstoff liegen können.

Der Dampfkanal ist von dem Messkanal zumindest teilweise getrennt, was insbesondere bedeuten soll, dass der Messkanal von dem Dampfkanal grundsätzlich voneinander verschieden und zumindest lokal begrenzt getrennt ist, wodurch Messkanal und Dampfkanal unterschiedliche Medien tragen können. Durch eine Öffnung an der gleichen Seite des Messstutzens, welche in die Gasleitung ragen kann, kann jedoch eine Fluidzugänglichkeit zwischen Messkanal und Dampfkanal grundsätzlich gegeben sein.

Bezüglich der Anordnung von Messkanal und Dampfkanal ist es dabei vorgesehen, dass der Dampfkanal den Messkanal zumindest teilweise umrahmt. Somit kann der Messkanal im Inneren des Dampfkanals angerordnet sein, so dass er von außen zumindest teilweise, bevorzugt vollständig, von dem Dampfkanal umgeben ist. Dabei können Dampfkanal und Messkanal insbesondere koaxial angeordnet sein.

Das vorbeschriebene Vorsehen von Dampfkanal und Messkanal erlaubt eine zu den Lösungen aus dem Stand der Technik deutlich reduzierte Verschmutzung des Messstutzens beziehungsweise insbesondere des Messkanals. Denn schon dadurch, dass der Dampfkanal den Messkanal zumindest teilweise umschließt ist die dem Gasstrom des zu untersuchenden Gases ausgesetzte Wandung nicht die Außenwandung des Messkanals sondern vielmehr die Außenwandung des Dampfkanals. Dadurch bildet sich eine Verschmutzung zunächst an dem Dampfkanal, so dass eine Beeinträchtigung des Messkanals erst verhältnismäßig spät erfolgt. Dadurch kann selbst bei einer zu dem Stand der Technik vergleichbaren Verschmutzung der aktive störungsfreie Messzeitraum und damit der Messzeitraum ohne das Vorsehen eines Services zum Regenerieren des Messstutzens deutlich verlängert werden.

Darüber hinaus kann dadurch, dass bei einem Regenerieren des Messstutzens das Mittel zum Entfernern der Verschmutzung, wie insbesondere der Dampf, durch den außen liegenden Dampfkanal geleitet wird, beispielsweise der Dampf definiert und lokal gerichtet zu der verschmutzten Außenwand geleitet werden. Dadurch kann eine Reinigung beziehungsweise eine Regenerierung des Messstutzens besonders effektiv sein.

Weiterhin kann durch eine derartig gezielte Regenerierung der Messstutzen mit einer besonders geringen Menge an Dampf gereinigt werden, wobei trotz geringem Volumen ein vergleichsweise hoher Druck des Reinigungsmittels, insbesondere von Dampf, vorliegen kann. Dies kann zum einen eine Reinigung mit einem vergleichsweise geringem Energieaufwand ermöglichen, was eine Regenerierung und damit ein Betreiben einer mit einem derartigen Messstutzen ausgestatteten Rohranordnung besonders ökonomisch gestalten kann. Darüber hinaus kann es so ermöglicht werden, dass ein Reinigen beziehungsweise ein Regenerieren eines Messstutzens in einer vergleichsweise geringen Zeitdauer ermöglicht werden kann. Dadurch kann weiterhin die Ausfallzeit deutlich vermindert werden, in welcher ein Messstutzen nicht verwendet werden kann und damit ein Gas nicht untersucht werden kann. Eine Ausfallzeit kann so reduziert werden. Ferner kann eine Beeinflussung von gegebenenfalls weiteren Messvorrichtungen, die etwa in der Gasleitung stromabwärts des Messstutzens vorgesehen sind, durch das Verringern der Menge an Reinigungsmittel beziehungsweise Inertisierungsmittel signifikant reduziert werden. Ferner kann es durch den vorbeschriebenen Messstutzen ermöglicht werden, dass selbst bei einer notwendigen Regenerierung diese bis zu einem hohen Verschmutzungsgrad erfolgen kann, ohne dass der Messstutzen entfernt werden müsste, was eine Regenerierung deutlich zeit- und kostenschonender gestalten kann.

Darüber hinaus ergibt sich durch eine verringerte notwendige Menge an Reinigungsmittel, wie etwa Wasserdampf, der weitere Vorteil, dass auch ein Inertisieren verbessert werden kann. Denn bei der Verwendung von Dampf als Reinigungsmittel, beispielsweise, sollte dieses Mittel zum Lösen der Ablagerungen beziehungsweise der Verunreinigungen aus dem System, also insbesondere aus der Gasleitung, vor dem Fortführen einer Messung wieder entfernet werden, wie dies vorstehend bereits beschrieben ist. Ein derartiger Inertisierungsvorgang kann beispielsweise mittels Stickstoff erfolgen, welcher ebenfalls durch die Speiseleitung, etwa durch das Schalten eines entsprechenden Ventils, durch den Messstutzen und dabei ebenfalls durch die Dampfleitung geführt wird. Dadurch, dass das System, wie vorstehend beschrieben, nach einer Reinigung weniger Dampf aufweist, kann auch ein Inertisierungsvorgang mit weniger Inertisierungsmittel, wie etwa Stickstoff, erfolgen. Somit kann auch der sich an einen Reinigungsvorgang anschließende Inertisierungsvorgang besonders ökonomisch sein.

Eine zeitsparende Regenerierung beziehungsweise ein verlängerter Messzyklus kann dabei insbesondere dann von großem Vorteil sein, wenn etwa unmittelbar Prozessabgase oder Produktgase eines chemischen Prozesses, wie etwa der Kohlenmonoxidherstellung, untersucht werden. Denn insbesondere in dieser Anwendung kann ein Ausfall der Messeinrichtung nachteilig und mit vergleichsweise hohen Kosten verbunden sein.

Der vorbeschriebene Messstutzen ist dabei zudem einfach herstellbar, da die vorbeschriebenen Vorteile durch eine einfache und kostengünstige Konstruktion, beispielsweise durch zwei koaxial angeordnete Rohre, erfolgen können. Daher ist auch die Herstellung eines derartigen Messstutzens kostengünstig möglich. Ferner lässt sich eine einfache Implementierung in bestehende Systeme ermöglichen. Ein vorbeschriebener Messstutzen übt dabei keine Beeinflussung auf die Ausrichtung der Messstrahlung aus.

Zusammenfassend kann ein vorbeschriebener Messstutzen somit eine Verlängerung einer aktiven Messphase, eine Verringerung einer für eine Regenerierung notwendigen Zeitdauer und ein energiearmes und ressourcenschonendes Betreiben ermöglichen.

In einer bevorzugten Ausgestaltung kann der Messkanal durch eine Messkanalwandung begrenzt sein und kann der Dampfkanal durch eine die Messkanalwandung zumindest teilweise umrahmende Dampfkanalwandung begrenzt sein, wobei die Dampfkanalwandung eine größere Länge aufweist als die Messkanalwandung. Insbesondere kann es dabei vorgesehen sein, dass die Dampfkanalwandung tiefer in das Innere der Gasleitung ragt, als die Messkanalwandung, die Dampfkanalwandung also bezüglich der Messkanalwandung in das Innere der Gasleitung hervorsteht. Insbesondere in dieser Ausgestaltung konnte es in überraschender Weise ermöglicht werden, dass ein Verschmutzen des Messkanals beziehungsweise unter Umständen grundsätzlich das Ablagern von Verunreinigungen reduziert werden kann. Insbesondere an der Messkanalwandung kann das Ablagern von Verunreinigungen in dieser Ausgestaltung signifikant reduziert werden. Somit können in dieser Ausgestaltung die Messzyklen besonders stark verlängert werden, was die Stillstandzeiten einer mit einem derartigen Messstutzen ausgestatteten Anordnung noch weiter verringern kann. Somit kann insbesondere in dieser Ausgestaltung ein besonders verlässliches Messsystem ermöglicht werden.

In einer weiteren bevorzugten Ausgestaltung kann der Messstutzen aus Stahl, insbesondere aus Edelstahl, geformt sein. Insbesondere in dieser Ausgestaltung kann der Messstutzen besonders unanfällig für viele Medien beziehungsweise beständig gegen viele Medien sein, so dass der Mussstutzen ein besonders breites Anwendungsgebiet bezüglich seiner Anwendung von zu vermessenden Gasen und deren Verschmutzungen aufweisen kann. Darüber hinaus kann in dieser Ausgestaltung der Messstutzen problemlos regeneriert werden, da der Messstutzen auch stabil gegenüber einer Vielzahl von Regenerierungsmedien, wie etwa Wasserdampf, beziehungsweise Inertisierungsmedien ist.

In einer weiteren bevorzugten Ausgestaltung kann der Messstutzen einen Rohrstutzenbereich aufweisen, der an einem Flansch befestigt ist, wobei der Flansch zum Fixieren des Rohrstutzenbereichs an der Gasleitung dient. Unter einem Rohstutzenbereich ist dabei ein derartiger Bereich des Messstutzens zu verstehen, der rohförmig ausgestaltet ist uns beispielsweise zwei koaxiale Rohre aufweist, die als Messkanalwandung beziehungsweise als Dampfkanalwandung dienen und somit den Messkanal und den Dampfkanal definieren. In dieser Ausgestaltung kann wiederum eine Herstellung besonders einfach und kostengünstig sein, da der Rohrstutzen beispielsweise als Doppelrohrstutzen ausgestaltet werden kann und dabei den inneren Messkanal und den äußeren Dampfkanal ausbilden kann. Dabei kann der Durchmesser sowohl des den Messkanal ausbildenden Innenrohres als auch des den Dampfkanal ausbildenden Außenrohres auf einfache Weise an das gewünschte Anwendungsgebiet anpassbar sein. Somit kann eine besonders einfache Anpassbarkeit an das gewünschte Anwendungsgebiet realisiert werden. Darüber hinaus kann der Flansch eine besonders einfache Fixierung des Messstutzens beziehungsweise des Rohrstutzenbereichs an der Innenwandung der Gasleitung ermöglichen, so dass ein sicherer Halt des Messstutzens ermöglicht werden kann. Weiterhin kann der Flansch in seiner Größe und Form an die Innenwandung anpassbar sein, so dass auf eine Ausrichtung beziehungsweise eine Justierung des Messstutzens gegebenenfalls verzichtet werden kann. Für eine Justierung können jedoch Mittel an dem Flansch vorgesehen sein, um etwa auf einfache Weise eine Feinjustierung des Messstutzens erreichen zu können. Der Flansch kann beispielsweise mit der Gasleitung verschweißt sein oder kann durch Schraubverbindungen mit dieser befestigt sein.

Betreffend weitere technische Merkmale und Vorteile des Messstutzens wird hiermit explizit auf die Ausführungen betreffend die Rohranordnung, das Verfahren und auf die Figuren beziehungsweise die Beschreibung der Figuren verwiesen.

Gegenstand der vorliegenden Erfindung ist ferner eine Rohranordnung, aufweisend eine Gasleitung zum Führen eines zu untersuchenden Gases, wobei an der Gasleitung wenigstens ein Messstutzen angeordnet ist, wobei der Messstutzen ein derartiger Messstutzen ist, wie dieser vorstehend im Detail beschrieben ist.

Eine derartige Rohranordnung weist somit eine Gasleitung auf, durch welche zu untersuchendes Gas geleitet werden kann. Das zu untersuchende Gas kann beispielsweise unmittelbar ein Prozessgas sein oder auch ein sonstiges Gas, welches beispielsweise auf seine Reinheit beziehungsweise auf Verunreinigungen untersucht werden soll. Als nicht beschränkende Beispiele kann die Rohranordnung Verwendung finden zur Bestimmung von Sauerstoff in Kohlenmonoxid, wobei das zu untersuchende Gas beispielsweise unmittelbar Prozessgas einer Kohlenmonoxidherstellung sein kann. Insbesondere bei derartigen Anwendungen kann bereits ein kleiner Teil einer Verschmutzung, wie etwa von Sauerstoff, in dem Gasstrom von Nachteil sein, so dass eine sichere Untersuchung sichergestellt werden sollte. Sich an dem Messstutzen bildende Ablagerungen entstehen beispielsweise durch eine Kombination von Staub, Wasser, ggf. Schwefelverbindungen, also beispielsweise allen Anteilen, die bei der mageren Verbrennung von Koks entstehen können.

Beispielsweise kann die Gasleitung rohrförmig sein und einen Durchmesser aufweisen, der an das gewünschte Anwendungsgebiet angepasst ist. Beispielsweise kann die Gasleitung eine Stahlleitung, etwa eine Edelstahlleitung, sein.

An der Gasleitung ist wenigstens ein Messstutzen angeordnet, wie dieser vorstehend im Detail beschrieben ist. Hierzu kann die Gasleitung eine Öffnung beziehungsweise eine Durchführung aufweisen, um den Messstutzen durch die Gasleitungswandung zu führen oder beispielsweise eine Speiseleitung zu dem Messstutzen zu führen. Ferner kann der Messstutzen, etwa durch einen Flansch, an der Innenwandung oder der Außenwandung der Gasleitung fixiert sein. Bevorzugt können zwei Messstutzen vorgesehen sein, wobei ein Messstutzen derart angeordnet ist, dass durch diesen die Messstrahlung in die Gasleitung geführt wird und ein weiterer Messstutzen derart angeordnet ist, dass durch diesen die Messstrahlung aus der Gasleitung führbar ist.

Ferner kann eine Strahlungsquelle zum Emittieren von Messstrahlung derart angeordnet sein, dass die Messstrahlung durch den Messkanal wenigstens eines Messstutzens strahlt. Die Strahlungsquelle kann beispielsweise ein Laser sein, wie etwa ein TDLS-Laser. Hierzu, muss der Messstutzen derart ausgerichtet sein, dass seine Achse im Wesentlichen rechtwinklig zu der Achse der Gasleitung angeordnet ist.

Gegenüberliegend zu der Strahlungsquelle ist ein Detektor vorgesehen, um die durch die Gasleitung beziehungsweise das zu untersuchende Gas gestrahlte Messstrahlung zu detektieren, wobei der Detektor mit einem Messstutzen verbunden beziehungsweise an diesem angeordnet sein kann. Im Detail kann es somit vorgesehen sein, dass zwei Messstutzen an der Gasleitung angeordnet sind, wobei eine Strahlungsquelle zum Emittieren von Messstrahlung derart angeordnet ist, dass die Messstrahlung durch den Messkanal eines ersten Messstutzens in die Gasleitung führbar ist, und dass ein Detektor zum Detektieren der Messstrahlung derart angeordnet ist, dass die Messstrahlung aus der Gasleitung in den Messkanal eines zweiten Messstutzens und zu dem Detektor führbar ist.

Insbesondere in der vorbeschriebenen Ausgestaltung kann es notwendig werden, dass sich bei einem Betrieb an oder in dem Messstutzen ablagernde Verunreinigungen entfernt werden müssen und das System anschließend gereinigt und inertisiert, beziehungsweise regeneriert, wird. Dazu kann der Dampfkanal zunächst mit einem Reinigungsmittel, wie insbesondere Wasserdampf, durchspült werden, und kann der Dampfkanal anschließend mit einem Inertisierungsmittel, wie beispielsweise Stickstoff, durchspült werden.

Durch das Vorsehen wenigstens eines, insbesondere von zwei vorbeschriebenen Messstutzen kann dabei ein besonders energiearmes, zeitgünstiges und ressourcenschonendes Regenerieren des Messstutzens ermöglicht werden.

Hierzu kann es vorgesehen sein, dass der Dampfkanal mit einer Speiseleitung verbunden ist, durch welche selektiv ein Reinigungsmittel, wie etwa Wasserdampf, zum Lösen von Ablagerungen und ein Intertisierungsmittel, wie etwa Stickstoff, in den Dampfkanal führbar ist. Dabei kann eine Auswahl des Reinigungsmittels oder des Inertisierungsmittels beispielsweise ermöglicht werden durch das Anordnen eines entsprechenden Ventils, wie etwa eines Dreiwegeventils, etwa ausgebildet als Kugelhahnventil, stromaufwärts des Messstutzens und etwa in der Speiseleitung. Insbesondere in dieser Ausgestaltung kann ein Reinigungsvorgang beziehungsweise ein Inertisierungsvorgang besonders einfach und mit nur geringem baulichem Aufwand ermöglicht werden. Das Ansteuern der Speiseleitung kann dabei in für den Fachmann verständlicher Weise realisierbar sein durch eine Steuereinheit, welche beispielhaft und nicht beschränkend ein entsprechendes Mittel zum Bereitstellen von Wasserdampf beziehungsweise von Stickstoff und das Ventil ansteuern kann.

Ferner kann etwa durch ein händisches Auswechseln beziehungsweise Anschließen der jeweiligen Quelle der Speiseleitung eine Auswahl des durch den Dampfkanal geführten Mediums ermöglicht werden. In dieser Ausgestaltung kann eine Fehlfunktion besonders sicher verhindert werden.

In einer weiteren bevorzugten Ausgestaltung kann es ferner vorgesehen sein, dass eine Mehrzahl von Stabiliserungsstreben vorgesehen ist, die mit dem Messstutzen und der Gasleitung verbunden ist. Insbesondere in dieser Ausgestaltung kann eine besonders stabile Anordnung ermöglicht werden, welche ferner besonders kostengünstig ermöglicht werden kann. Auf diese Weise können beispielsweise Vibrationen sicher abgefangen werden und ein Nachjustieren des Messstutzens nach einer bestimmten Betriebsdauer kann ferner minimiert werden oder hierauf kann vollständig verzichtet werden, da ein Verstellen oder Verbiegen des Messstutzens sicher verhindert oder zumindest deutlich reduziert werden kann. Beispielsweise können die Stabilisierungsstreben als Knotenbleche ausgestaltet sein.

Weiterhin kann es vorteilhaft sein, dass eine Mehrzahl von Messstutzen in Flussrichtung des zu untersuchenden Gases nacheinander angeordnet ist. Beispielsweise kann eine Mehrzahl an jeweils ein oder zwei Messstutzen, eine Strahlungsquelle und einen Detektor aufweisende Detektionseinheiten in Flussrichtung des zu untersuchenden Gases nacheinander angeordnet sein. In dieser Ausgestaltung können beispielsweise einzelne Messwerte verifiziert oder auf genaue Weise das zu untersuchende Gas auf eine Mehrzahl von Fremdstoffen untersucht werden.

Betreffend weitere technische Merkmale und Vorteile der Rohranordnung wird hiermit explizit auf die Ausführungen betreffend den Messstutzen, das Verfahren und auf die Figuren beziehungsweise die Beschreibung der Figuren verwiesen.

Gegenstand der vorliegenden Erfindung ist ferner ein Verfahren zum optischen Untersuchen eines Gases unter Verwendung einer vorbeschriebenen Rohranordnung, aufweisend die Verfahrensschritte:
a) Durchführen einer ersten Messphase umfassend die Verfahrensschritte:
   a1) Erzeugen einer Messstrahlung;
   a2) Leiten der Messstrahlung durch das zu untersuchende Gas zu einem Detektor, wobei die Messstrahlung durch den Messkanal eines wie vorstehend im Detail beschrieben ausgestalteten Messstutzens in das zu untersuchende Gas oder von dem zu untersuchenden Gas in den Messkanal eines wie vorstehend im Detail beschrieben ausgestalteten Messstutzens geleitet wird; und
   a3) Analysieren der auf den Detektor auftreffenden Messstrahlung;
b) Beenden der ersten Messphase bei dem Vorliegen einer vorbestimmten Bedingung;
c) Durchführen eines Regenerierungsvorgangs umfassend die Verfahrensschritte:
   c1) Leiten eines Reinigungsmittels durch den Dampfkanal des Messstutzens; und
   c2) Leiten eines Inertisierungsmittels durch den Dampfkanal des Messstutzens, insbesondere nach einem Beenden des Verfahrensschrittes c1); und
d) Gegebenenfalls Beginnen einer weiteren Messphase gemäß Verfahrensschritt a).

Das vorbeschriebene Verfahren basiert somit auf der Verwendung eines Messstutzens beziehungsweise einer Rohranordnung, wie diese vorstehend im Detail beschrieben sind. Dabei wird die Rohranordnung beziehungsweise der Messstutzen insbesondere dazu angewendet, um ein Gas auf Verunreinigungen beziehungsweise Fremdbestandteile zu untersuchen, beispielsweise mittels einer Absorptionsmessung beziehungsweise Transmissionsmessung beziehungsweise beispielsweise grundsätzlich unter Analysieren eines Spektrums der durch das zu untersuchende Gas geführten Messstrahlung.

Dabei umfasst das Verfahren gemäß Verfahrensschritt a) zunächst das Durchführen einer ersten Messphase. Die erste Messphase umfasst dabei zunächst gemäß Verfahrensschritt a1) das Erzeugen einer Messstrahlung, insbesondere unter Verwendung eines Lasers, wie etwa eines TDSL. Als solcher kann die herstellerspezifische in Wellenlänge und Lichtstärke variierende Messstrahlung von dem jeweilig zu bestimmenden Messstoff und Messbereich abhängig sein.

Gemäß Verfahrensschritt a2) umfasst die erste Messphase ferner das Leiten der Messstrahlung durch das zu untersuchende Gas zu einem Detektor, wobei die Messstrahlung durch den Messkanal eines wie vorstehend im Detail beschrieben ausgestalteten Messstutzens in das zu untersuchende Gas oder von dem zu untersuchenden Gas in den Messkanal eines wie vorstehend im Detail beschrieben ausgestalteten Messstutzens geleitet wird. In anderen Worten kann es vorgesehen sein, dass ein Messstutzen strahlungsquellenseitig und/oder detektorseitig angeordnet ist. Dabei wird der Messstutzen oder werden die Messstutzen entsprechend ausgerichtet, so dass die Messstrahlung den Messstutzen beziehungsweise den oder die Messkanäle im Wesentlichen ungehindert passieren kann. Der Detektor kann dabei wie vorstehend beschrieben angepasst an das gewünschte Anwendungsgebiet ausgestaltet sein.

In einem weiteren Verfahrensschritt a3) umfasst das vorbeschriebene Verfahren das Analysieren der auf den Detektor auftreffenden Messstrahlung, etwa durch Ermitteln eines Absorptionswertes oder eines Transmissionswertes der Messstrahlung mit dem Detektor beziehungsweise grundsätzlich das Analysieren eines Spektrums der Messstrahlung unter Verwendung des Detektors. In diesem Schritt kann somit beispielsweise anhand der Absorption beziehungsweise anhand der Transmission der durch das zu untersuchenden Gas geleitetet Messstrahlung die Reinheit beziehungsweise das Vorliegen von Verunreinigungen beziehungsweise Fremdsubstanzen in dem zu untersuchenden Gas detektiert werden. Der Verfahrensschritt a) entspricht somit grundsätzlich einer an sich gewünschten Messung.

Bei dem Vorliegen einer vorbestimmten Bedingung ist es gemäß Verfahrensschritt b) ferner vorgesehen, dass die erste Messphase beendet wird. Die vorbestimmte Bedingung kann dabei insbesondere auf einer Verschmutzung des Messstutzens und damit einem Abfall der Transmissionswerte auf einen vorbestimmten Wert basieren. Beispielsweise kann bei einer Transmission in einem Normalzustand von 70-80% die Messphase dann beendet werden, wenn der Transmissionswert auf einen Wert von 25% oder darunter fällt, beispielsweise, wenn die Transmission auf einen Wert von 5% oder darunter fällt. Ferner kann eine Fehlermeldung des Detektors eine vorbestimmte Bedingung sein. Somit kann das Ende der ersten Messphase beziehungsweise die Länge der ersten Messphase basieren auf einer Verschmutzung des Messstutzens.

Wenn die erste Messphase beendet wurde, schließt sich an diese gemäß Verfahrensschritt c) ein Regenerierungsvorgang an, bei welchem die Verschmutzungen beziehungsweise Verkrustungen des Messstutzens gelöst werden können. Hierzu umfasst der Regenerierungsvorgang gemäß Verfahrensschritt c1) das Leiten eines Reinigungsmittels durch den Dampfkanal des Messstutzens. Das Reinigungsmittel kann beispielsweise Wasserdampf sein und dazu dienen, die Verschmutzungen zu lösen und zu entfernen. Dabei kann die Dauer und Stärke der Beaufschlagung mit Wasserdampf von der Art und Stärke der Ablagerungen abhängen. Grundsätzlich kann ein Einführen von Wasserdampf in den Dampfkanal mit einem Druck von 5bar für 10 bis 15 Minuten erfolgen. Dabei kann eine Blende von 1mm zur Druck- und Mengenreduzierung verwendet werden. Im Anschluss an das Verwenden von Reinigungsmittel ist es von Vorteil, dieses aus dem System auszutragen, da es anschließende Messungen verfälschen und sich gegebenenfalls nachteilig auf Bauteile auswirken kann. Hierzu ist es gemäß Verfahrensschritt c2) vorgesehen, dass ein Inertisierungsmittel durch den Dampfkanal des Messstutzens geleitet wird. Hier kann beispielsweise Stickstoff verwendet werden. Je nach Dauer und Menge des Eintrags des Reinigungsmittels kann die Dauer und Menge des Inertisierungsmittels an den konkreten Anwendungsfall angepasst werden. Beispielsweise kann ein Einbringen von Stickstoff von Vorteil sein, um den Messstutzen von Restwasser zu befreien und zu trocknen.

Im Anschluss an die Intertisierung kann gemäß Verfahrensscritt d) sich gegebenenfalls ein Beginnen einer weiteren, beispielsweise zweiten, Messphase anschließen. Mit Bezug auf die zweite Messphase wird im Detail Bezug genommen auf Verfahrensschritt a), wobei sich grundsätzlich eine beliebige Anzahl an Messphasen gemäß Verfahrensschritt a) und Regenerierungsphasen gemäß Verfahrensschritt c) mit Verfahrensschritt b) aneinander anschließen können um so eine dauerhafte Messung ermöglichen zu können.

Das vorbeschriebene Verfahren ermöglicht zusammenfassend insbesondere die Vorteile einer ressourcenschonenden und kostengünstigen Regenerierung eines Messstutzens, wobei die Messphasen verlängert und die Regenerierungsphasen verkürzt werden können.

Betreffend weitere technische Merkmale und Vorteile des Verfahrens wird hiermit explizit auf die Ausführungen betreffend den Messstutzen, die Rohranordnung und auf die Figuren beziehungsweise die Beschreibung der Figuren verwiesen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1. eine schematische geschnittene Darstellung einer Rohranordnung gemäß der vorliegenden Erfindung von der Seite;
Fig. 2 eine schematische geschnittene Darstellung eines Messstutzens für die Rohranordnung aus Fig. 1 von der Seite;
Fig. 3 eine schematische Darstellung des Messstutzens aus Fig. 2 von vorne; und
Fig. 4 eine schematische Darstellung eines mit Verstärkungsstreben stabilisierten Messstutzens an einer Gasleitung.

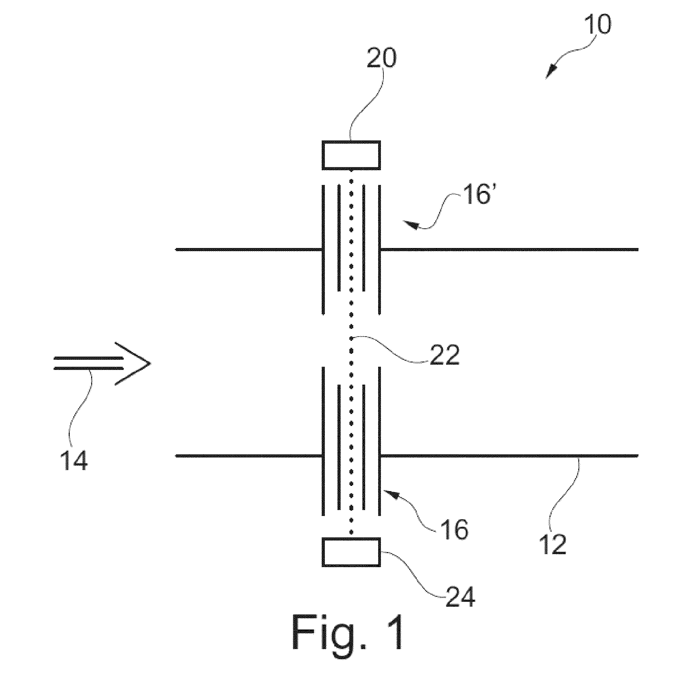

In der Figur 1 ist eine Rohranordnung 10 gezeigt. Die Rohranordnung 10 kann insbesondere Verwendung finden zum Untersuchen der Reinheit eines Gases, welches durch eine Gasleitung 12 strömt, wie dies der Pfeil 14 andeuten soll. In das Innere der Gasleitung 12 ragend sind zwei Messstutzen 16, 16' angeordnet, wie diese nachstehend im Detail beschrieben sind.

Dabei ist einer der Messstutzen 16 benachbart zu einer Strahlungsquelle 24, wie etwa einem Laser, zum Emittieren von Messstrahlung 22 derart angeordnet, dass die Messstrahlung 22 durch den Messstutzen 16' in das zu untersuchende Gas gelangt. Ferner ist der zweite Messstutzen 16' benachbart einem Detektor 20 angeordnet derart, dass die Messstrahlung 22 von dem zu untersuchenden Gas in den Messstutzen 16, 16' und zu dem Detektor 20 geleitet wird.

Es kann vorteilhaft sein, dass eine Mehrzahl an Messeinrichtungen aufweisend entsprechende Messstutzen 16, 16' Strahlungsquellen 24 und Detektoren 20 mit einer entsprechenden Peripherie jeweils stromabwärts zueinander mit Bezug auf das zu untersuchende Gas vorgesehen sind. Dabei können beispielsweise entsprechende Messungen verifiziert werden oder es können spezifische Messungen mit Bezug auf unterschiedliche Substanzen beziehungsweise Verunreinigungen durchgeführt werden.

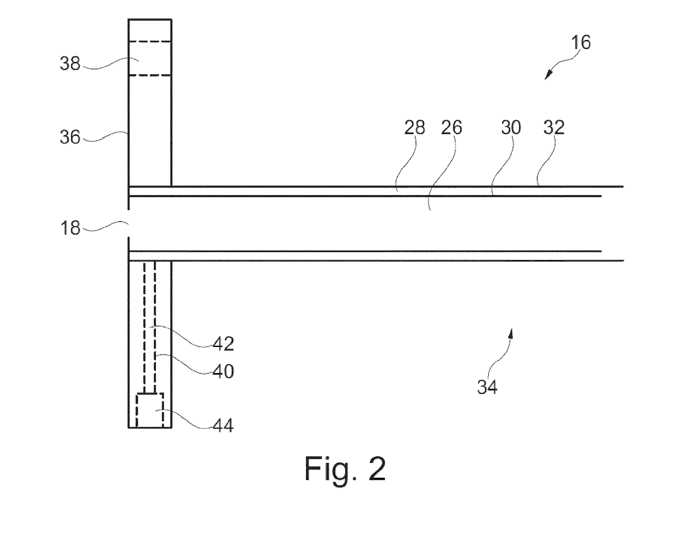

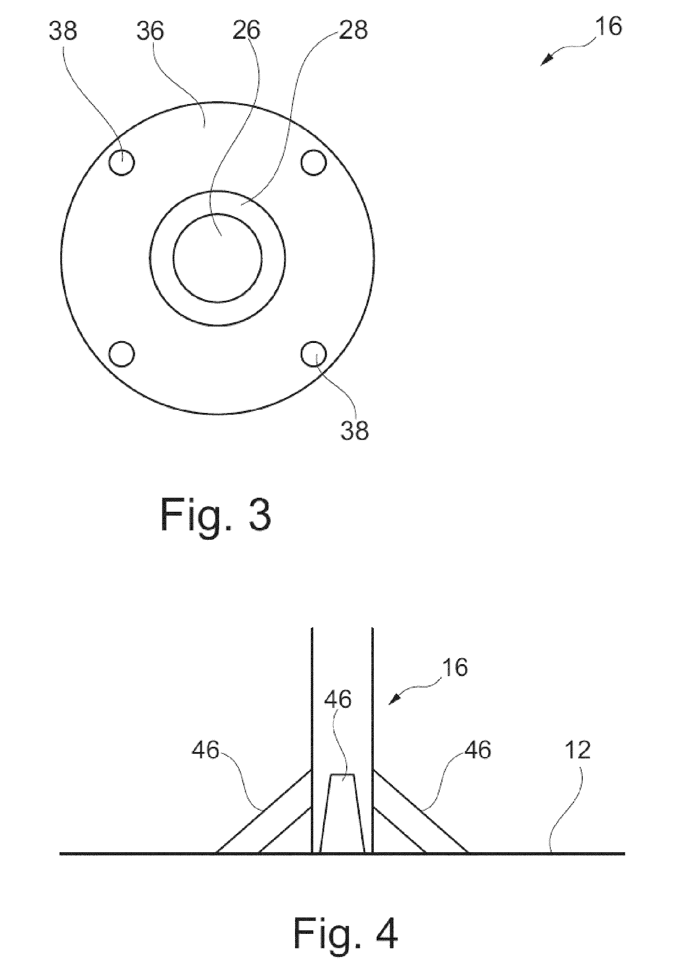

In der Figur 2 ist im Detail der Messstutzen 16 gezeigt. Dabei ist es insbesondere gezeigt, dass der Messstutzen 16 einen Messkanal 26 zum Durchleiten der Messstrahlung 22 aufweist, wobei der Messkanal 26 eine Öffnung 18 zum Aufnehmen beziehungsweise Ausleiten der Messstrahlung 22 aufweist. Ferner weist der Messstutzen 16 zusätzlich zu dem Messkanal 26 einen von dem Messkanal 26 zumindest teilweise getrennten Dampfkanal 28 auf, wobei der Dampfkanal 28 den Messkanal 26 vollständig umrahmt beziehungsweise umschließt. Dies in gemäß Figur 2 insbesondere derart realisiert, dass der Messkanal 26 durch eine Messkanalwandung 30 begrenzt ist und dass der Dampfkanal 28 durch eine die Messkanalwandung 30 zumindest teilweise umrahmende Dampfkanalwandung 32 begrenzt ist. Es ist ferner gezeigt, dass die Dampfkanalwandung 32 eine größere Länge aufweist, als die Messkanalwandung 30. Die Messkanalwandung 30 wie auch die Dampfkanalwandung 32 können dabei aus Stahl gefertigt sein. Ferner können die Messkanalwandung 30 und die Dampfkanalwandung 32 als koaxiale Rohe ausgestaltet sein und/oder einen Rohrstutzenbereich 34 ausbilden. Neben dem Rohrstutzenbereich 34 kann der Messstutzen 16 ferner einen Flansch 36 aufweisen, mittels dem der Messstutzen 16 an der Gasleitung 12, etwa an der inneren oder äußeren Oberfläche, fixierbar sein kann. Ferner kann der Flansch 36 in seiner Form etwa an die Form der Gasleitung 12 beziehungsweise ihrer inneren oder äußeren Oberfläche angepasst sein oder kann ein Sockel zum Befestigen des Flansches 36 vorgesehen sein. Ferner können in dem etwa aus Stahl gefertigten Flansch 36 Flanschlöcher 38 vorgesehen sein, um den Flansch 36 an der Gasleitung 12 zu fixieren. Dies ist auch in der Figur 3 gezeigt. Die Messkanalwandung 30 und die Dampfkanalwandung 32 müssen ferner in einem rechten Winkel zu dem Flansch 36 an diesem angeordnet sein, um eine möglichst vorteilhafte Ausrichtung mit Bezug auf die Messstrahlung 22 zu erreichen.

Für eine stabile Anordnung der Messkanalwandung 30 beziehungsweise der Dampfkanalwandung 32 können diese etwa stabil im oder an dem Flansch 36 fixiert sein, und/oder können Verbindungsmittel die Messkanalwandung 30 und die Dampfkanalwandung 32 verbindend angeordnet sein, welche die Strömung des entsprechenden Mediums vorteilhafter Weise nicht oder nicht signifikant negativ beeinflussen. Mit Bezug auf die Messkanalwandung 30 beziehungsweise die Dampfkanalwandung 32 ist es ferner gezeigt, dass diese eine unterschiedliche Länge aufweisen, so dass die Dampfkanalwandung 32 mit Bezug auf die Messkanalwandung 30 hervorsteht. Diese überstehende Länge kann beispielsweise in einem nicht beschränkenden Bereich von ≥ 1mm bis ≤5cm, vorteilhafter Weise von ≥ 5mm bis ≤2cm, etwa bei 10mm liegen. Beispielsweise kann die Dampfkanalwandung 32 eine etwa von dem Flansch 36 beginnende Länge in einem Bereich von ≥100mm bis ≤ 300mm, beispielsweise in einem Bereich von ≥150mm bis ≤ 250mm, etwa von 200mm aufweisen, wobei die Messkanalwandung 30 eine Länge aufweisen kann, die in einem Bereich von ≥ 3% bis ≤8% geringer sein kann und etwa in einem Bereich von 190mm liegen kann.

Mit Bezug auf den Flansch 36 kann dieser in einer nicht beschränkenden Weise ein derartiger Flansch sein, der nach DIN EN 1092-1beziehungsweise DIN EN 2501-1 Anschlussmaße von DN50 beziehungsweise PN16 aufweist. In diesem Fall können, wie in Figur 3 gezeigt, vier Flanschlöcher 38 vorgesehen sein, wobei jedoch auch mehr oder weniger Flanschlöcher 38 vorgesehen sein können.

Mit Bezug auf die Durchmesser des Messkanals 26 kann es ferner vorgesehen sein, dass die Messkanalwandung 30 als ein Rohr ausgestaltet ist, welches einen Innendurchmesser in einem Bereich von ≥ 5mm bis ≤ 35mm, etwa in einem Bereich von ≥ 10mm bis ≤ 25mm aufweist. Beispielsweise kann die Messkanalwandung durch ein Rohr nach DIN EN 10357:2014-3 mit der Kennzeichnung DN15 oder DN20 ausgestaltet sein und dabei etwa eine Wandstärke in einem Bereich von ≥ 1mm bis ≤ 2mm, etwa von 1,5mm aufweisen.

Mit Bezug auf den Durchmesser des Dampfkanals 28 kann es ferner vorgesehen sein, dass die Dampfkanalwandung 32 als ein Rohr ausgestaltet ist, welches einen Innendurchmesser in einem Bereich von ≥ 5mm bis ≤ 35mm, etwa in einem Bereich von ≥ 10mm bis ≤ 25mm aufweist. Beispielsweise kann die Dampfkanalwandung durch ein Rohr nach DIN EN 10357:2014-3 mit der Kennzeichnung DN15 oder DN20 ausgestaltet sein und dabei etwa eine Wandstärke in einem Bereich von ≥ 1mm bis ≤ 2mm, etwa von 1,5mm aufweisen. Dabei ist jedoch darauf zu achten, dass die Dampfkanalwandung 32 einen entsprechend größeren Durchmesser aufweist, als die Messkanalwandung 30. Beispielsweise kann die Messkanalwandung 30 ein DN15-Rohr sein und kann die Dampfkanalwandung ein DN20-Rohr sein.

In einem nicht-beschränkenden Beispiel kann der Innendurchmesser des Messkanals 26 mit Bezug auf den Innendurchmesser des Dampfkanals 28, etwa aber nicht beschränkend bei einer Wandstärke in einem Bereich von ≥ 1mm bis ≤ 2mm, in einem Bereich von ≥ 60% bis ≤ 95%, beispielsweise in einem Bereich von ≥ 75% bis ≤ 90%, liegen.

In der Figur 2 ist ferner gezeigt, dass eine Zuführeitung 40 vorgesehen ist, welche in dem Flansch 36 gefertigt ist und zu dem Dampfkanal 28 führt. Durch die Zuführleitung 40 können selektiv Reinigungsmittel beziehungsweise Inertisierungsmittel in den Dampfkanal 28 geleitet werden. Dabei kann die Zuführleitung 40 als Bohrung ausgestaltet sein, welche einen ersten Bereich 42 aufweist, der benachbart zu dem Dampfkanal 28 angeordnet ist und der einen geringeren Durchmesser aufweist, als ein zweiter Bereich 44, der benachbart zu einer Öffnung der Zuführleitung 40 angeordnet ist, wobei so ein Anschluss einer Speiseleitung möglich ist.

Ferner ist in der Figur 4 gezeigt, dass eine Mehrzahl, etwa drei, von etwa als Knotenbleche ausgestalteten Stabilisierungsstreben 46 vorgesehen sind, die mit dem Messstutzen 16 und der Gasleitung 12 verbunden sind, um den Messstutzen 16 zu stabilisieren. Dabei können die Stabilisierungsstreben 46 etwa zueinander den gleichen Abstand aufweisen beziehungsweise kann zwischen je zwei benachbarten Stabilisierungsstreben 46 jeweils der gleiche Winkel eingeschlossen werden, so dass eine symmetrische Anordnung entsteht. Durch die Stabilisierungsstreben 46 kann eine negative Beeinflussung auf die Ausrichtung des Messstutzens 16 durch verschiedenste Einflüsse, wie etwa durch Vibrationen, vermieden werden, so dass eine Verschlechterung der Messung durch eine nicht mehr optimale Ausrichtung des Messstutzens 16 vermieden oder zumindest signifikant reduziert werden kann.

## Patentansprüche

1. Messstutzen zum optischen Untersuchen eines durch eine Gasleitung (12) geleiteten Gases durch Analysieren einer durch das Gas geführten Messstrahlung (22), wobei der Messstutzen (16, 16') an der das zu untersuchende Gas führenden Gasleitung (12) fixierbar ist, und wobei der Messstutzen (16, 16') einen Messkanal (26) zum Durchleiten der Messstrahlung (22) aufweist, **dadurch gekennzeichnet, dass** der Messstutzen (16, 16') zusätzlich zu dem Messkanal (26) einen von dem Messkanal (26) zumindest teilweise getrennten Dampfkanal (28) aufweist, wobei der Dampfkanal (28) den Messkanal (26) zumindest teilweise umrahmt.

2. Messstutzen nach Anspruch 1, **dadurch gekennzeichnet, dass** der Messkanal (26) durch eine Messkanalwandung (30) begrenzt ist und dass der Dampfkanal (28) durch eine die Messkanalwandung (30) zumindest teilweise umrahmende Dampfkanalwandung (32) begrenzt ist, wobei die Dampfkanalwandung (32) eine größere Länge aufweist als die Messkanalwandung (30).

3. Messstutzen nach einem der Ansprüche 1 oder 2, **dadurch gekennzeichnet, dass** der Messstutzen (16, 16') aus Stahl geformt ist.

4. Messstutzen nach einem der Ansprüche 1 bis 3, **dadurch gekennzeichnet, dass** der Messstutzen (16, 16') einen Rohrstutzenbereich (34) aufweist, der an einem Flansch (36) befestigt ist, wobei der Flansch (36) zum Fixieren des Rohrstutzenbereichs (34) an der Gasleitung (12) dient.

5. Rohranordnung, aufweisend eine Gasleitung (12) zum Führen eines zu untersuchenden Gases, wobei an der Gasleitung (12) wenigstens ein Messstutzen (16, 16') angeordnet ist, **dadurch gekennzeichnet, dass** der Messstutzen (16, 16') ein Messstutzen (16, 16') nach einem der Ansprüche 1 bis 4 ist.

6. Rohranordnung nach Anspruch 5, **dadurch gekennzeichnet, dass** zwei Messstutzen (16, 16') an der Gasleitung (12) angeordnet sind, wobei eine Strahlungsquelle (24) zum Emittieren von Messstrahlung (22) derart angeordnet ist, dass die Messstrahlung (22) durch den Messkanal (26) eines ersten Messstutzens (16) in die Gasleitung (12) führbar ist, und dass ein Detektor (20) zum Detektieren der Messstrahlung (22) derart angeordnet ist, dass die Messstrahlung (22) aus der Gasleitung (12) in den Messkanal (26) eines zweiten Messstutzens (16') und zu dem Detektor (20) führbar ist.

7. Rohranordnung nach Anspruch 5 oder 6, **dadurch gekennzeichnet, dass** der Dampfkanal (28) mit einer Speiseleitung verbunden ist, durch welche selektiv Reinigungsmittel oder Inertisierungsmittel in den Dampfkanal (28) führbar ist.

8. Rohranordnung nach einem der Ansprüche 5 bis 7, **dadurch gekennzeichnet, dass** eine Mehrzahl von Stabilisierungsstreben (46) vorgesehen ist, die mit dem Messstutzen (16, 16') und der Gasleitung (12) verbunden ist.

9. Rohranordnung nach einem der Ansprüche 5 bis 8, **dadurch gekennzeichnet, dass** eine Mehrzahl von Messstutzen (16, 16') in Flussrichtung des zu untersuchenden Gases nacheinander angeordnet sind.

10. Verfahren zum optischen Untersuchen eines Gases unter Verwendung einer Rohranordnung (10) nach einem der Ansprüche 5 bis 9, aufweisend die Verfahrensschritte:
a) Durchführen einer ersten Messphase umfassend die Verfahrensschritte:
a1) Erzeugen einer Messstrahlung (22);
a2) Leiten der Messstrahlung (22) durch das zu untersuchende Gas zu einem Detektor (20), wobei die Messstrahlung (22) durch den Messkanal (26) eines Messstutzens (16) nach einem der Ansprüche 1 bis 4 in das zu untersuchende Gas oder von dem zu untersuchenden Gas in den Messkanal (26) eines Messstutzens (16') nach einem der Ansprüche 1 bis 4 geleitet wird; und
a3) Analysieren der auf den Detektor (20) auftreffenden Messstrahlung (22);
b) Beenden der ersten Messphase bei dem Vorliegen einer vorbestimmten Bedingung;
c) Durchführen eines Regenerierungsvorgangs umfassend die Verfahrensschritte:
c1) Leiten eines Reinigungsmittels durch den Dampfkanal (28) des Messstutzens (16, 16'); und
c2) Leiten eines Inertisierungsmittels durch den Dampfkanal (28) des Messstutzens (16, 16'); und
d) Gegebenenfalls erneutes Beginnen einer weiteren Messphase gemäß Verfahrensschritt a).
